# FASCICULE DE BREVET EUROPEEN

(11) **EP 3 169 949 B1**
(45) Date de publication et mention de la délivrance du brevet: **06.06.2018**
(21) Numéro de dépôt: 15738650.9
(22) Date de dépôt: 16.07.2015
(51) Int. Cl.: F25B 39/04

(54) **BOUTEILLE DE CONDENSEUR ADAPTÉE POUR UNE UTILISATION DANS UN CIRCUIT DE CLIMATISATION, PLUS PARTICULIÈREMENT LE CIRCUIT DE CLIMATISATION D'UN VÉHICULE AUTOMOBILE**
ADAPTIERTER KONDENSATOREMPFÄNGER ZUR VERWENDUNG IN EINER KLIMAANLAGE, INSBESONDERE IN DER KLIMAANLAGE EINES KRAFTFAHRZEUGES
CONDENSER RECEIVER ADAPTED FOR USE IN AN AIR-CONDITIONING SYSTEM, MORE SPECIFICALLY THE AIR-CONDITIONING SYSTEM OF A MOTOR VEHICLE

(30) Priorité: 16.07.2014 FR 1456824
(43) Date de publication de la demande: 24.05.2017
(73) Titulaire: Valeo Systemes Thermiques, 78321 Le Mesnil-Saint-Denis (FR)
(72) Inventeur: AZZOUZ, Kamel, F-75012 Paris (FR); SZOSTEK, Dawid, F-78000 Versailles (FR)
(74) Mandataire: Neuviale, Bertrand
(86) Numéro de dépôt international: PCT/EP2015/066350
(87) Numéro de publication internationale: WO 2016/009014

(56) Documents cités:
- EP-A2- 1 505 358
- WO-A1-2014/044522
- JP-A- 2004 061 076

## Description

### Domaine de l'invention

La présente invention concerne une bouteille de condenseur utilisée pour un circuit de climatisation, par exemple le circuit de climatisation d'un véhicule automobile. Plus précisément, la présente invention concerne une bouteille de condenseur conforme au préambule de la revendication 1, et permettant d'améliorer le procédé pour refroidir un liquide utilisé dans la boucle froide du système de climatisation. Une telle bouteille est connue du document EP 1 505 358 A2.

### Etat de la technique

L'utilisation d'un système de climatisation est connue dans le domaine de l'industrie automobile. Un système de climatisation permet d'améliorer, de manière significative, le confort dans l'habitacle d'un véhicule automobile. Le système de climatisation peut être utilisé pour réguler la température à l'intérieur de l'habitacle du véhicule automobile et pour déshydrater l'air ambiant à l'intérieur dudit véhicule automobile. Le système de climatisation peut donc être utilisé, notamment, dans le but d'éviter la formation de buée sur les parois intérieures des vitres d'un véhicule automobile.
Dans une boucle froide, généralement utilisée dans un système de climatisation, les étapes d'évaporation, de compression, de condensation et d'expansion se succèdent en utilisant un fluide adapté tel qu'un fluide de type R134 ou 1234YF. Après l'étape de condensation, le fluide est maintenu dans un état liquide à l'intérieur d'un réservoir. Ce réservoir peut être intégré dans un condenseur ou peut être isolé et connecté à la sortie dudit condenseur.

Lors de la condensation du fluide dans le condenseur, ledit fluide circule, à une température de saturation dudit fluide, vers un réservoir tel qu'une bouteille de condenseur. Une bouteille de condenseur a pour fonction de séparer les phases liquide et gaz d'un fluide afin de laisser sortir uniquement le fluide dans son état liquide. Simultanément, la bouteille de condenseur peut être utilisée dans le but de sous-refroidir le fluide, c'est-à-dire d'abaisser la température du fluide, utilisé dans la boucle froide, en dessous de la température de saturation correspondant à la pression de condensation définie.

Ce processus de sous-refroidissement est un procédé connu dans l'art antérieur pour un système de refroidissement par compression. L'effet technique de ce procédé réside dans l'amélioration de l'efficacité dudit système de refroidissement par compression grâce à la modification de l'enthalpie du fluide utilisé dans la boucle froide.

Selon l'art antérieur, la bouteille de condenseur a pour première fonction de maintenir le fluide utilisé dans la boucle froide. Une fonctionnalité additionnelle consiste, par exemple, à absorber l'humidité grâce à la présence d'un matériau tel qu'un gel adapté. La bouteille de condenseur peut également servir à filtrer le fluide présent dans la boucle froide, évitant ainsi aux particules, présentant une dimension supérieure à une valeur seuil déterminée, de circuler au sein du système de climatisation.

Selon l'art antérieur, la fonction de sous-refroidissement du fluide présent au sein d'une bouteille de condenseur n'est pas optimisée.

Il apparaît que des modifications, permettant d'améliorer la fonction de sous-refroidissement du fluide présent à l'intérieur d'une bouteille de condenseur, s'avèrent nécessaires pour optimiser l'efficacité du système de climatisation.

### Objet de l'invention

La présente invention concerne une bouteille de condenseur adaptée pour recevoir et contenir un fluide utilisé dans une boucle froide d'un système de climatisation, la bouteille de condenseur comprenant une paroi extérieure et une paroi intérieure, ladite paroi intérieure définissant un espace intérieur pour contenir un fluide, ladite paroi extérieure étant pourvue, sur sa surface extérieure, d'une pluralité de nervures permettant d'augmenter l'échange de chaleur entre le fluide contenu dans l'espace intérieur et l'air ambiant présent à l'extérieur de ladite bouteille de condenseur.

Selon un mode de réalisation de la présente invention, la paroi extérieure de ladite bouteille de condenseur présente une épaisseur comprise entre 0,8 et 4 mm.

Selon un mode de réalisation de la présente invention, chaque nervure de la pluralité de nervures présente une hauteur, dans la direction radiale de ladite bouteille de condenseur, comprise entre 0,2 et 10 mm.

Selon un mode de réalisation de la présente invention, chaque nervure de la pluralité de nervures présente une épaisseur comprise entre 0,2 et 10 mm.

Selon un mode de réalisation de la présente invention, la paroi extérieure de ladite bouteille de condenseur est obtenue grâce à un processus d'extrusion.

Selon un mode de réalisation de la présente invention, ladite bouteille de condenseur est obtenue grâce à un processus de brasage.

Selon un mode de réalisation de la présente invention, ladite bouteille de condenseur présente une paroi intérieure et une paroi extérieure positionnées à une distance déterminée l'une de l'autre pour délimiter un espace intermédiaire compris entre ladite paroi intérieure et ladite paroi extérieure, ledit espace intermédiaire comprenant un composant adapté pour stocker et libérer une quantité déterminée de chaleur.

Selon un mode de réalisation de la présente invention, le composant adapté pour stocker et libérer une quantité déterminée de chaleur comprend un matériau à changement de phase (MCP).

### Brève descriptions des dessins

Les but, objet et caractéristiques de la présente invention ainsi que ses avantages apparaîtront plus clairement à la lecture de la description ci-dessous, des modes de réalisation préférés d'une bouteille de condenseur selon l'invention, faite en référence aux dessins dans lesquels :
- la figure 1 montre une vue en perspective d'une bouteille de condenseur selon l'invention,
- la figure 2 représente, en détail, l'extrémité supérieure de la bouteille de condenseur selon la figure 1,
- la figure 3 montre, de façon schématique et selon une vue en coupe, les différents éléments présents à l'intérieur de la bouteille de condenseur selon les figures 1 et 2, et
- la figure 4 représente un détail de l'extérieur de la bouteille de condenseur selon les figures 1 et 2.

### Description détaillée de l'invention

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

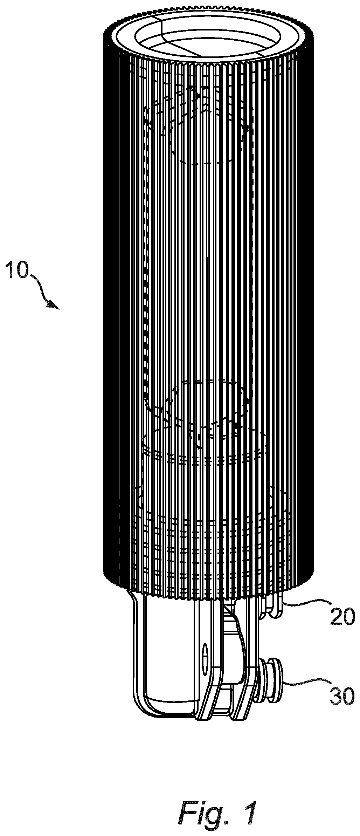

La figure 1 montre, en perspective, une bouteille de condenseur 10 selon la présente invention ladite bouteille pouvant être utilisée en combinaison avec un condenseur et étant adaptée pour retenir en son sein une quantité de fluide présent dans une boucle froide tel qu'un liquide de type R134 ou 1234YF .

Pour recevoir et laisser échapper le fluide, la bouteille de condenseur 10 est, en son extrémité inférieure, pourvue d'une entrée 20 et d'une sortie 30.

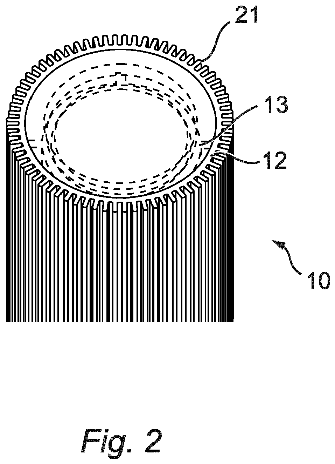

La figure 2 représente un détail de l'extrémité supérieure de la bouteille de condenseur 10 selon l'invention.

Comme montré sur la figure 2, la bouteille de condenseur 10 comprend une paroi extérieure 12 et une paroi intérieure 13. La paroi extérieure 12 de la bouteille de condenseur 10 est couverte d'un nombre déterminé de nervures 21 s'étendant dans une direction longitudinale sur ladite surface extérieure de la paroi extérieure 12. L'ensemble formé par les nervures 21 présentes à l'extérieur de la bouteille de condenseur 10 a pour effet d'augmenter la surface adaptée pour l'échange de chaleur avec l'air ambiant. En d'autres termes, l'échange de chaleur avec l'air ambiant autour de la bouteille de condenseur 10 est ainsi amélioré par rapport à l'échange de chaleur réalisé selon l'art antérieur avec des bouteilles de condenseur présentant une surface extérieure lisse.

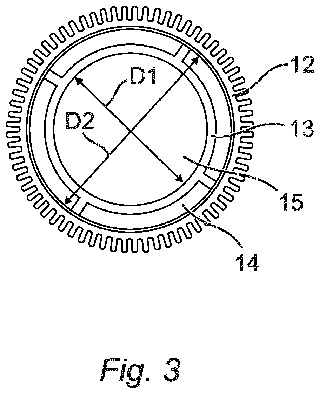

La figure 3 représente, de façon schématique et selon une vue en coupe, la bouteille de condenseur 10 selon les figures 1 et 2. La figure 3 montre les différentes nervures 21 visibles à l'extérieur de la paroi extérieure 12 de la bouteille de condenseur 10. La paroi extérieure 12 et la paroi intérieure 13 définissent un espace intermédiaire 14, situé entre la paroi extérieure 12 et la paroi intérieure 13. Ledit espace intermédiaire 14, selon l'invention, peut être utilisé pour contenir une quantité déterminée de matériau à changement de phase (MCP). Le volume disponible à l'intérieur de la paroi intérieure 13 définit un espace interne 15 afin de recevoir et maintenir une quantité de fluide utilisé dans la boucle froide.

La présence d'une quantité déterminée de matériau à changement de phase (MCP) présente plusieurs effets techniques. En effet, le matériau de type MCP est un matériau adapté pour stocker et libérer une quantité déterminée de chaleur. La présence de ce matériau entre la paroi extérieure 12 et la paroi intérieure 13 de la bouteille de condenseur 10 peut servir à stabiliser la température du liquide présent à l'intérieur de l'espace interne 15. Cette stabilité a un premier effet technique positif sur l'efficacité du système de condensation dans lequel la bouteille de condenseur 10 est utilisée.

Comme montré sur la figure 2, la paroi extérieure 12 s'étend au-dessus de l'extrémité de la paroi intérieure 13, auprès de l'extrémité supérieure de la bouteille de condenseur 10. Cette particularité offre l'opportunité d'obturer l'extrémité supérieure de la bouteille de condenseur 10 à l'aide d'un bouchon unique couvrant l'intégralité des différents espaces disponibles à l'intérieur de la bouteille de condenseur 10.

Comme montré sur la figure 3, la bouteille de condenseur 10 a un diamètre extérieur D2. Le volume utile au maintien du fluide présent à l'intérieur de la boucle froide est défini à l'aide du diamètre intérieur D1. La valeur de D1 est comprise entre 25 et 65 mm. La valeur de D2 est telle que le ratio du diamètre intérieur D1 par rapport au diamètre extérieur D2 se situe, de préférence, entre 0 et 50%, en fonction de l'utilisation de la bouteille de condenseur 10 et de la stabilisation du fluide contenu à l'intérieur de l'espace interne 15.

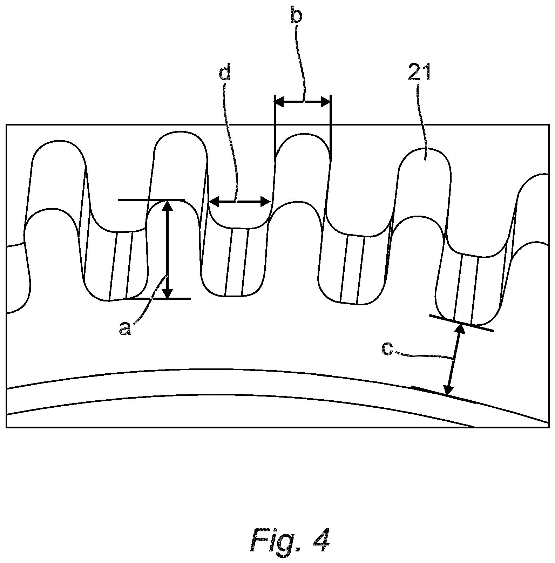

Sur la figure 4, les références « a », « b », « c » et « d » indiquent différentes caractéristiques relatives respectivement à la hauteur, à la largeur et à l'épaisseur d'une nervure 21 ainsi qu'à l'intervalle entre deux nervures 21, à la profondeur de la paroi extérieure 12. Ces différentes dimensions « a », « b », « c » et « d » sont définies en fonction de l'utilisation de l'utilisation de la bouteille de condenseur 10 sur laquelle les différentes nervures 21 sont présentes.

Ainsi, la valeur de la hauteur « a » des différentes nervures 21, selon la figure 4, se situe de préférence dans un intervalle de valeurs comprises entre 0 et 10 mm. La valeur de la largeur « b » des nervures 21, selon la figure 4, se situe de préférence dans un intervalle de valeurs comprises entre 0 et 10 mm. La valeur de l'épaisseur « c » se situe, de préférence, dans un intervalle de valeurs comprises entre 0,8 et 4 mm, de préférence entre 1 et 3 mm. La valeur de la distance « d » entre deux nervures adjacentes se situe, de préférence, dans un intervalle de valeurs comprises entre 0,2 et 10 mm.

Selon un mode de réalisation préféré de la présente invention, les différentes parois, telles que montrées sur une vue en coupe de la figure 3, sont obtenues grâce à un procédé d'extrusion. A l'exception de différentes connexions destinés à la bouteille de condenseur 10, la bouteille de condenseur 10 et les différents bouchons permettant d'obturer les extrémités sont obtenus à l'aide d'un procédé unique.

Selon un mode de réalisation préféré de la présente invention, l'extrémité supérieure de la bouteille de condenseur 10, telle que montrée sur la figure 2, et l'extrémité inférieure de la bouteille de condenseur 10 peuvent être obturées grâce à un bouchon, tel qu'un bouchon en plastique, en combinaison avec des anneaux en forme de « O ». Alternativement, les extrémités supérieure et inférieure peuvent être obturées à l'aide de bouchons en aluminium, en combinaison avec des anneaux en forme de « O ». De façon alternative encore, les extrémités supérieure et inférieure peuvent être obturées grâce à un processus de brasage au cours duquel les bouchons sont brasés aux extrémités de la bouteille de condenseur 10.

Selon la présente invention, le matériau de type MCP utilisé pour remplir l'espace intermédiaire 14 peut être un matériau de type MCP pour lequel la température de changement de phase est comprise entre 45 et 55°C.

Selon un mode de réalisation de la présente invention, le matériau MCP peut être de type liquide ou de type composite comportant du graphite permettant d'améliorer la conductivité thermique du matériau MCP.

## Revendications

1. Bouteille de condenseur (10) adaptée pour recevoir et contenir un fluide utilisé dans une boucle froide d'un système de climatisation, la bouteille de condenseur (10) comprenant une paroi extérieure (12) et une paroi intérieure (13), ladite paroi intérieure (13) définissant un espace interne (15) pour contenir un fluide, ladite bouteille étant **caractérisée en ce que** ladite paroi extérieure (12) est pourvue, sur sa surface extérieure, d'une pluralité de nervures (21) permettant d'augmenter l'échange de chaleur entre le fluide contenu dans l'espace interne (15) et l'air ambiant présent à l'extérieur de ladite bouteille de condenseur (10).

2. Bouteille de condenseur (10) selon la revendication 1, dans laquelle la paroi extérieure (12) de ladite bouteille de condenseur (10) présente une épaisseur comprise entre 0,8 et 4 mm.

3. Bouteille de condenseur (10) selon la revendication 1 ou 2, dans laquelle chaque nervure (21) de la pluralité de nervures (21) présente une hauteur, dans la direction radiale de ladite bouteille de condenseur (10), comprise entre 0,2 et 10 mm.

4. Bouteille de condenseur (10) selon l'une des revendications précédentes, dans laquelle chaque nervure (21) de la pluralité de nervures (21) présente une épaisseur comprise entre 0,2 et 10 mm.

5. Bouteille de condenseur (10) selon l'une des revendications précédentes, dans laquelle la paroi extérieure (12) de ladite bouteille de condenseur (10) est obtenue grâce à un processus d'extrusion.

6. Bouteille de condenseur (10) selon l'une des revendications 1 à 4, dans laquelle ladite bouteille de condenseur (10) est obtenue grâce à un processus de brasage.

7. Bouteille de condenseur (10) selon l'une des revendications précédentes, dans laquelle la paroi intérieure (13) et la paroi extérieure (12) sont positionnées à une distance déterminée l'une de l'autre pour délimiter un espace intermédiaire (14) compris entre ladite paroi intérieure (13) et ladite paroi extérieure (12), ledit espace intermédiaire (14) comprenant un composant adapté pour stocker et libérer une quantité déterminée de chaleur.

8. Bouteille de condenseur (10) selon l'une des revendications précédentes, dans laquelle le composant adapté pour stocker et libérer une quantité déterminée de chaleur comprend un matériau à changement de phase (MCP).

## Patentansprüche

1. Kondensatorflasche (10), zum Aufnehmen und Enthalten einer in einem Kältekreis einer Klimaanlage verwendeten Flüssigkeit ausgebildet, wobei die Kondensatorflasche (10) eine Außenwand (12) und eine Innenwand (13) umfasst, wobei die Innenwand (13) einen Innenraum (15) zum Enthalten einer Flüssigkeit definiert, wobei die Flasche **dadurch gekennzeichnet ist, dass** die Außenwand (12) an ihrer Außenfläche mit einer Vielzahl von den Wärmeaustausch zwischen der im Innenraum (15) enthaltenen Flüssigkeit und der außerhalb der Kondensatorflasche (10) vorhandenen Umgebungsluft ermöglichenden Rippen (21) ausgestattet ist.

2. Kondensatorflasche (10) nach Anspruch 1, wobei die Außenwand (12) der Kondensatorflasche (10) eine Stärke zwischen 0,8 und 4 mm aufweist.

3. Kondensatorflasche (10) nach Anspruch 1 oder 2, wobei jede Rippe (21) der Vielzahl von Rippen (21) eine Höhe in der radialen Richtung der Kondensatorflasche (10) zwischen 0,2 und 10 mm aufweist.

4. Kondensatorflasche (10) nach einem der vorhergehenden Ansprüche, wobei jede Rippe (21) der Vielzahl von Rippen (21) eine Stärke zwischen 0,2 und 10 mm aufweist.

5. Kondensatorflasche (10) nach einem der vorhergehenden Ansprüche, wobei die Außenwand (12) der Kondensatorflasche (10) durch einen Extrusionsprozess hergestellt wird.

6. Kondensatorflasche (10) nach einem der Ansprüche 1 bis 4, wobei die Kondensatorflasche (10) mit einem Lötprozess hergestellt wird.

7. Kondensatorflasche (10) nach einem der vorhergehenden Ansprüche, wobei die Innenwand (13) und die Außenwand (12) in einem von einer zur anderen zum Abgrenzen eines zwischen der Innenwand (13) und der Außenwand (12) angeordneten Zwischenraums (14) vorgegebenen Abstand angeordnet sind, wobei der Zwischenraum (14) eine zum Speichern und Freisetzen einer vorgegebenen Wärmemenge ausgebildete Komponente umfasst.

8. Kondensatorflasche (10) nach einem der vorhergehenden Ansprüche, wobei die zum Speichern und Freisetzen einer vorgegebenen Wärmemenge ausgebildete Komponente ein Phasenwechselmaterial (PWM) umfasst.

## Claims

1. Condenser cylinder (10) adapted to receive and contain a fluid used in a cold loop of an air-conditioning system, the condenser cylinder (10) comprising an external wall (12) and an internal wall (13), said internal wall (13) defining an interior space (15) for containing a fluid, said cylinder being **characterized in that** said external wall (12) is provided on an external surface thereof with a plurality of ribs (21) enabling an increase in heat exchange between the fluid contained in the interior space (15) and the ambient air present outside said condenser cylinder (10).

2. Condenser cylinder (10) according to Claim 1, in which the external wall (12) of said condenser cylinder (10) has a thickness of between 0.8 and 4 mm.

3. Condenser cylinder (10) according to Claim 1 or 2, in which each rib (21) from the plurality of ribs (21) has a height of between 0.2 and 10 mm in the radial direction of said condenser cylinder (10).

4. Condenser cylinder (10) according to one of the preceding claims, in which each rib (21) from the plurality of ribs (21) has a thickness of between 0.2 and 10 mm.

5. Condenser cylinder (10) according to one of the preceding claims, in which the external wall (12) of said condenser cylinder (10) is obtained by means of an extrusion process.

6. Condenser cylinder (10) according to one of Claims 1 to 4, in which said condenser cylinder (10) is obtained by means of a brazing process.

7. Condenser cylinder (10) according to one of the preceding claims, in which the internal wall (13) and the external wall (12) are positioned at a set distance from one another in order to delimit an intermediate space (14) provided between said internal wall (13) and said external wall (12), said intermediate space (14) comprising a component adapted to store and release a set quantity of heat.

8. Condenser cylinder (10) according to one of the preceding claims, in which the component adapted to store and release a set amount of heat comprises a phase change material (PCM).
